# EUROPÄISCHE PATENTANMELDUNG

(11) **EP 0 649 082 A1**
(43) Veröffentlichungstag der Anmeldung: **19.04.1995**
(21) Anmeldenummer: 94116362.8
(22) Anmeldetag: 18.10.1994
(51) Int. Cl.: G06F 1/16

(54) **Vorrichtung zur Übertragung von Daten eines Taschencomputers**

(30) Priorität: 18.10.1993 DE 9315863 U; 15.03.1994 DE 4408701
(71) Anmelder: Nickol, Harald, D-55276 Oppenheim (DE)
(72) Erfinder: Nickol, Harald, D-55276 Oppenheim (DE)
(74) Vertreter: Sparing - Röhl - Henseler Patentanwälte

(57) **Zusammenfassung**

Die Erfindung betrifft eine Datenübertragungsvorrichtung für einen Taschencomputer mit einem Datenübertragungsmodem zur drahtlosen Übertragung von Daten, welches mittels einer Datenbus-Steckvorrichtung elektrisch mit einem Datenbus des Taschencomputers verbindbar ist. Für eine einfache und komfortable Handhabung der Kombination aus Taschencomputer und Datenübertragungsvorrichtung ist vorgesehen, daß die Datenübertragungsvorrichtung ein Gehäuse aufweist, das geeignet ist, den Taschencomputer lösbar aufzunehmen, wobei die Datenbus-Steckvorrichtung an dem Gehäuse so angeordnet ist, daß sie in die Datenbus-Öffnung des Taschencomputers einschiebbar ist.

## Beschreibung

Die Erfindung betrifft eine Vorrichtung zur Übertragung von Daten eines Computers im Taschenformat (Pocket-Computer). Eine solche Übertragungsvorrichtung findet insbesondere im mobilen Einsatz eines Taschencomputers, z.B. auf Reisen, Anwendung.

Es sind bereits Vorrichtungen zur Übertragung von Daten für Taschencomputer bekannt. Die bekannten Übertragungsvorrichtungen weisen ein Datenübertragungsmodem zum drahtlosen Übertragen der von dem Taschencomputer oder an den Taschencomputer zu übermittelnden Daten auf. Hierfür steht ein besonderes Daten-Telekommunikationsnetz zur Verfügung. Die Übertragung erfolgt mittels bekannter Modulationsverfahren auf einem Hochfrequenzträger. Diese bekannten Datenübertragungsvorrichtungen sind jedoch in einem separaten Gehäuse untergebracht und mittels eines flexiblen Kabels mit dem Datenbus des Taschencomputers verbunden. In der Regel ist auch eine zweite Stromversorgung für die Übertragungsvorrichtung vorhanden.

Die Verwendung verschiedener Gehäuse für den Taschencomputer einerseits und für die Datenübertragungsvorrichtung andererseits ist jedoch im mobilen Einsatz äußerst nachteilig, da sich hierdurch kein kompakter Aufbau ergibt und die verschiedenen Geräte vom Benutzer gehalten werden müssen. Insbesondere beim Einsatz in einem öffentlichen Verkehrsmittel oder in einem Kraftfahrzeug ist die Handhabung daher äußerst unkomfortabel.

Der vorliegenden Erfindung liegt daher die Aufgabe zugrunde, eine bekannte Vorrichtung zur Übertragung von Daten gemäß dem Oberbegriff des Anspruchs 1 so weiterzubilden, daß sich eine einfache und komfortable Handhabung der Kombination aus Taschencomputer und Datenübertragungsvorrichtung ergibt.

Diese Aufgabe wird durch die Merkmale des Anspruchs 1 gelöst.

Die Erfindung geht von der Erkenntnis aus, daß die Handhabbarkeit dadurch wesentlich vereinfacht wird, daß der Taschencomputer mit dem Gehäuse der Datenübertragungsvorrichtung lösbar verbunden wird und darüber hinaus eine verschiebbare, in dem Gehäuse der Datenübertragungsvorrichtung vorgesehene Datenbus-Steckvorrichtung so anzuordnen, daß sie in die Datenbus-Öffnung des Taschencomputers einschiebbar ist.

Die Arretierung des Taschencomputers in dem Gehäuse des Datenübertragungsmodems kann mittels der Datenbus-Steckvorrichtung und/oder der zweiten Steckvorrichtung und/oder weiterer Arretierungsmittel erfolgen. Ferner ist es vorteilhaft, die Datenbus-Steckvorrichtung mittels eines an der Oberseite des Gehäuses der Datenübertragungsvorrichtung angeordneten Schiebers in die Datenbus-Öffnung des Taschencomputers einzuschieben.

Gemäß Anspruch 2 kann in dem Gehäuse zusätzlich eine Stromversorgungseinheit für den Taschencomputer vorgesehen sein, welche über eine zweite Steckvorrichtung mit dem Taschencomputer verbindbar ist. Ferner können nach Anspruch 5 Batterien und/oder Akkumulatoren zur Stromversorgung des Taschencomputers vorgesehen sein.

Die Unteransprüche beinhalten vorteilhafte Weiterbildungen der Erfindung.

In der Zeichnung sind vorteilhafte Ausführungsformen der Erfindung beispielhaft dargestellt. Es zeigen:
- Fig. 1A: ein erstes Ausführungsbeispiel einer Datenübertragungsvorrichtung in Aufsicht,
- Fig. 1B: einen Schnitt in Längsrichtung durch die Datenübertragungsvorrichtung,
- Fig. 1C: einen Schnitt in Querrichtung durch die Datenübertragungsvorrichtung,
- Fig. 2: eine oberseitige perspektivische Darstellung der Datenübertragungsvorrichtung mit Taschencomputer,
- Fig. 3: eine unterseitige perspektivische Darstellung der Datenübertragungsvorrichtung,
- Fig. 4: einen Schnitt in Längsrichtung durch eine Datenübertragungsvorrichtung gemäß einem zweiten Ausführungsbeispiel.

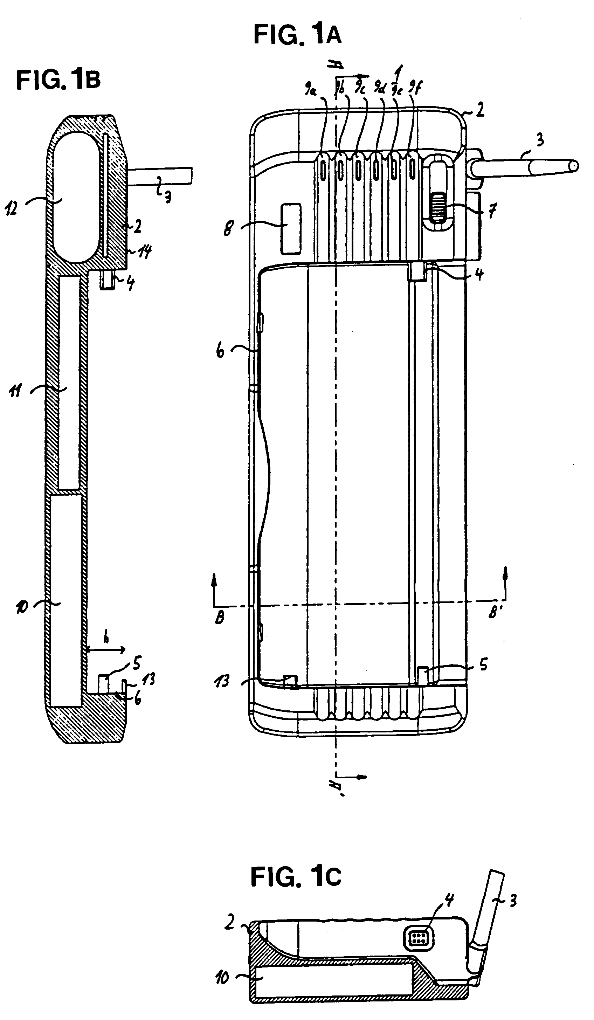

Fig. 1A zeigt ein erstes Ausführungsbeispiel einer Datenübertragungsvorrichtung 1 in Aufsicht. Ein Gehäuse 2 beherbergt ein Datenübertragungsmodem 10, eine Modem-Ansteuervorrichtung 11 und eine Batterie/Akkumulator-Kammer 12. In der Aufsicht der Fig. 1A ist die Sende-Empfangsantenne 3 und Datenbus-Steckvorrichtung 4 zur seriellen oder parallelen Übertragung der mit dem Taschencomputer auszutauschenden Daten und die Stromversorgungs-Steckvorrichtung 5 zur Stromversorgung des Taschencomputers erkennbar.

Der Taschencomputer ist in eine Aussparung 6 in dem Gehäuse 2 der Datenübertragungs-Vorrichtung 1 in der Weise einlegbar, daß er mit dem Gehäuse 2 der Datenübertragungsvorrichtung 1 mechanisch und elektrisch lösbar verbunden werden kann. In der gezeigten Darstellung ist der Taschencomputer aus der Datenübertragungsvorrichtung herausgenommen. Die elektrische Verbindung mit dem Taschencomputer erfolgt einerseits über die Stromversorgungs-Steckvorrichtung 5 und andererseits zum Austausch der Daten über die Datenbus-Steckvorrichtung 4. Die Stromversorgungs-Steckvorrichtung 5 und die Datenbus-Steckvorrichtung 4 greifen jeweils in entsprechende Öffnungen des Taschencomputers ein.

Die Arretierung des Taschencomputers in der Ausnehmung 6 des Gehäuses 2 kann in einfacher Weise dadurch erfolgen, daß eine der beiden sich gegenüberstehenden Steckvorrichtungen, im dargestellten Ausführungsbeispiel die Datenbus-Steckvorrichtung 4, mittels eines Schiebers aus der Ausnehmung 6 des Gehäuses 2 herausgeschoben wird. Nach Einlegen des Taschencomputers in die Ausnehmung 6 des Gehäuses 2 wird die Datenbus-Steckvorrichtung 4 mittels des Schiebers 7 sodann wieder in die Ausnehmung 6 des Gehäuses 2 und gleichzeitig in die Datenbus-Öffnung des Taschencomputers eingeschoben und mit dem Datenbus des Taschencomputers kontaktiert.

An der dem Bediener zugewandten Oberseite des Gehäuses 2 können zur Anzeige des Betriebszustandes der Datenübertragungsvorrichtung darüber hinaus ein Anzeigefeld 8 und Leuchtdioden 9a bis 9f vorgesehen sein.

Fig. 1B zeigt einen Schnitt in Längsrichtung entlang der Linie AA' durch das Gehäuse 2 der Datenübertragungsvorrichtung 1. In dem Gehäuse 2 ist das Datenübertragungsmodem 10, eine Modem-Steuervorrichtung 11 für das Datenübertragungsmodem 10 und eine Kammer 12 zur Aufnahme von Batterien und/oder Akkumulatoren vorgesehen. Der in die Ausnehmung 6 des Gehäuses 2 der Datenübertragungsvorrichtung 1 eingelegte Taschencomputer wird mittels der Datenbus-Steckvorrichtung 4 mit dem Datenübertragungsmodem 10 und der Modem-Steuervorrichtung 11 verbunden, das seinerseits mit der Sende-/Empfangs-Antenne 3 in Verbindung steht.

Wenn Daten von dem Taschencomputer mittels der Datenübertragungsvorrichtung zu einer externen Datenverarbeitungseinheit übertragen werden sollen, wird das Datenübertragungsmodem 10 durch einen entsprechenden Steuerbefehl der Modem-Steuervorrichtung 11 in einen Sendezustand geschaltet. Die zu übertragenden Daten werden mit einem bekannten Modulationsverfahren (z.B. Frequenz-Umtastverfahren FSK) in dem Datenübertragungsmodem auf einen Hochfrequenzträger aufmoduliert und über die Sende-/Empfangs-Antenne 3 abgestrahlt. Die weitere Übertragung erfolgt mittels eines Daten-Telekommunikationsnetzes. Sollen umgekehrt Daten von dem Taschencomputer empfangen werden, wird das Datenübertragungsmodem 10 in einen Empfangszustand geschaltet. Die über die Sende-/Empfangs-Antenne 3 empfangenen Daten werden in dem Datenübertragungsmodem 10 demoduliert und über die Datenbus-Steckvorrichtung 4 dem Taschencomputer zugeführt.

Darüber hinaus ist der Taschencomputer über die Stromversorgungs-Steckvorrichtung 5 mit den in der Kammer 12 befindlichen Batterien und/oder Akkumulatoren verbunden. Weiterhin ist es möglich, in dem Gehäuse 2 eine Stromversorgungseinheit vorzusehen, die wahlweise auch den Netzbetrieb der Datenübertragungsvorrichtung gestattet.

Die mechanische Arretierung des Taschencomputers in der Ausnehmung 6 des Gehäuses 2 kann bereits mittels der Steckvorrichtungen 5 und 4 sicher erfolgen. Darüber hinaus können weitere Arretierungen 13 an der Oberseite der Ausnehmung 6 vorgesehen sein. Vorzugsweise sind die Arretierungen 13 an der der verschiebbaren Datenbus-Steckvorrichtung gegenüberliegenden Seite angeordnet. Weiterhin ist die Höhe h der Ausnehmung 6 vorzugsweise so bemessen, daß sie mit dem Abstand des Bedienfeldes des Taschencomputers zu dessen Unterseite übereinstimmt und das Bedienfeld somit ebenflächig mit der Oberseite 14 des Gehäuses 2 der Datenübertragungsvorrichtung 1 abschließt.

Fig. 1C zeigt einen Schnitt entlang der Querrichtung durch das Gehäuse 2 der Datenübertragungsvorrichtung entlang der Linie BB'. Es sind die verschiebbare Datenbus-Steckvorrichtung 4, die Sende-/Empfangs-Antenne 3 und das in das Gehäuse 2 eingebaute Datenübertragungsmodem 10 erkennbar.

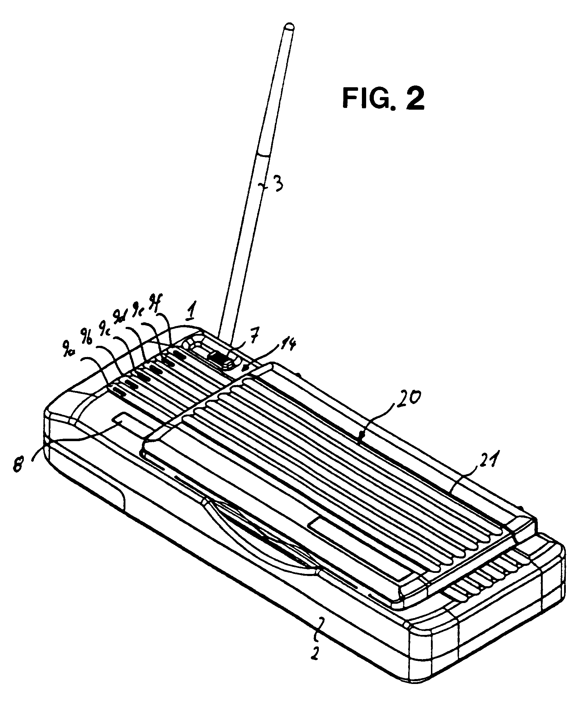

Fig. 2 zeigt den in das Gehäuse 2 der Datenübertragungsvorrichtung 1 eingelegten Taschencomputer 20. Der Taschencomputer 20 weist an der Oberseite einen verschließbaren Deckel 21 auf, der im gezeigten Zustand geschlossen dargestellt ist. Wird der Deckel 21 des Taschencomputers 20 geöffnet, so fällt die nicht gezeigte Bedienoberfläche des Taschencomputers 20 mit der Oberseite 14 des Gehäuses 2 ohne Stoßkante zusammen. Zum Einlegen des Taschencomputers 20 ist mittels des Schiebers 7 die Datenbus-Steckvorrichtung 4 aus der Ausnehmung 6 des Gehäuses 2 herauszuschieben. Der Taschencomputer 20 wird so in die Ausnehmung 6 eingelegt, daß dessen Öffnung für die Stromversorgung in die Stromversorgungs-Steckvorrichtung 5 eingreift. Nach Einlegen des Taschencomputers 20 in die Ausnehmung 6 wird die Datenbus-Steckvorrichtung 4 mittels des Schiebers 7 in die dafür vorgesehene Öffnung des Taschencomputers eingeschoben und mit dem Datenbus des Taschencomputers kontaktiert. Somit ergibt sich eine mechanisch und elektrisch stabile Verbindung zwischen dem Taschencomputer und der Datenübertragungsvorrichtung 1.

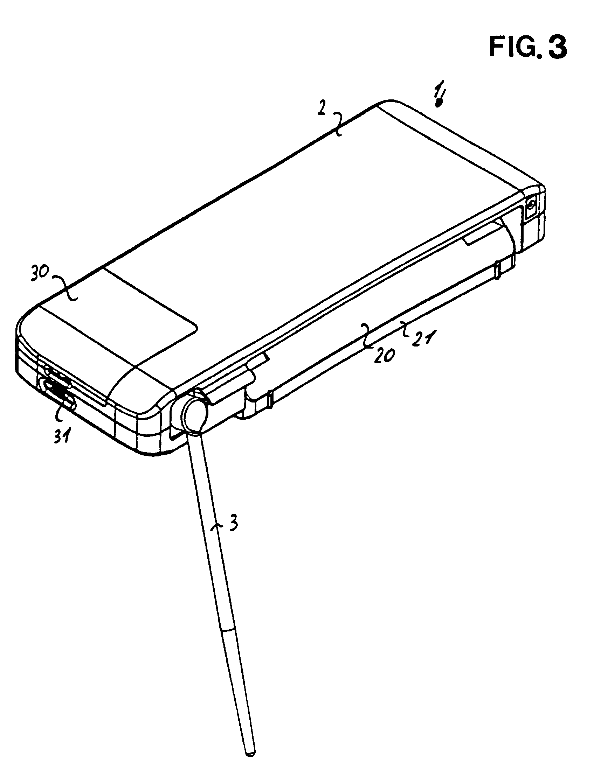

Fig. 3 zeigt die erfindungsgemäße Datenübertragungsvorrichtung von der Unterseite her. Der Taschencomputer 20 ist in das Gehäuse 2 der Datenübertragungsvorrichtung eingelegt. Gegenüber Fig. 2 zusätzlich erkennbar ist ein Deckel 30, der die Kammer 12 zur Aufnahme der Batterien und/oder Akkumulatoren verschließt. Ferner sind an der Seite des Gehäuses 2 ein oder mehrere Schalter 31 zum Ein- und Ausschalten der Stromversorgung und/oder des Datenübertragungsmodems 10 vorgesehen.

Aus den Zeichnungen ist der erfindungswesentliche kompakte und leicht bedienbare Aufbau der Datenübertragungsvorrichtung deutlich erkennbar.

Das Gehäuse 2 besitzt dazu vorzugsweise handliche Abmessungen, ein sogenanntes Hand-Hold-Format, um zusammen mit dem Kleincomputer 20 als mobile Kommunikationsstation mitgeführt werden zu können.

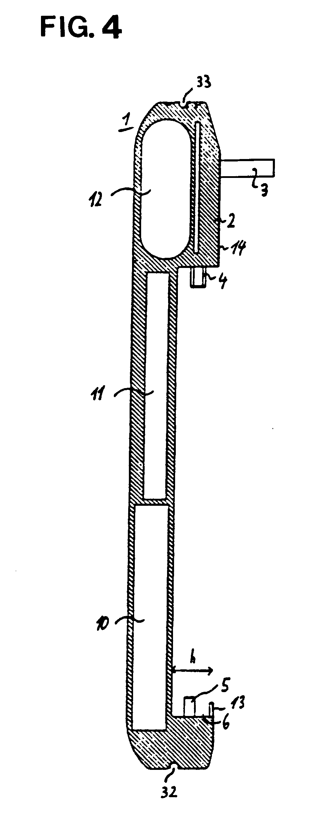

Fig. 4 zeigt ein zweites Ausführungsbeispiel der Datenübertragungsvorrichtung 1, die sich gegenüber dem vorstehend beschriebenen Ausführungsbeispiel dadurch unterscheidet, daß das Gehäuse 2 seitliche Außennuten 32, 33 für den Angriff einer Halterung aufweist. Die Außennuten 32, 33 können auch eine das Gehäuse 2 vorder- und seiten- sowie gegebenenfalls rückseitig umlaufende Nut bilden.

Die sich gegenüberstehenden Steckvorrichtungen 4, 5 können zudem so ausgebildet sein, daß die Datenbus-Steckvorrichtung 4 längsverschieblich ist, um aus dem Bereich der Aussparung 6 herausgezogen werden zu können, und die Stromversorgungs-Steckvorrichtung 5 einen in die Aussparung 6 ragenden Dorn aufweist, der zur Verbindungslinie der Steckvorrichtungen 4, 5 seitlich auslenkbar ist. Das Einsetzen und Herausnehmen des Taschencomputers wird hierdurch erleichtert, ohne daß beide Steckvorrichtungen 4, 5 aus der Aussparung 6 herausgezogen werden müssen.

Schließlich kann das Gehäuse 2 einen derartigen trapezförmigen Querschnitt aufweisen, daß eine Tastatur des eingelegten Taschencomputers 20 gegenüber einer horizontalen Aufstellfläche des Gehäuses 2 dem Benutzer entgegengeneigt ist.

## Patentansprüche

1. Datenübertragungsvorrichtung (1) für einen Taschencomputer (20) mit einem Datenübertragungsmodem (10) zur drahtlosen Übertragung von Daten, welches mittels einer Datenbus-Steckvorrichtung (4) elektrisch mit einem Datenbus des Taschencomputers (20) verbindbar ist, dadurch gekennzeichnet, daß die Datenübertragungsvorrichtung (1) ein Gehäuse (2) aufweist, das geeignet ist, den Taschencomputer (20) lösbar aufzunehmen, wobei die Datenbus-Steckvorrichtung (4) an dem Gehäuse (2) so angeordnet ist, daß sie in die Datenbus-Öffnung des Taschencomputers (20) einschiebbar ist.

2. Datenübertragungsvorrichtung (1) nach Anspruch 1, dadurch gekennzeichnet, daß das Gehäuse (2) zusätzlich eine Stromversorgungseinheit (12) für den Taschencomputer (20) aufweist, welche über eine an dem Gehäuse angeordnete zweite Steckvorrichtung (5) mit dem Stromversorgungsanschluß des Taschencomputers (20) verbindbar ist.

3. Datenübertragungsvorrichtung (1) nach Anspruch 2, dadurch gekennzeichnet, daß die Steckvorrichtung (5) einen Dorn aufweist, der gegenüberliegend der Datenbus-Steckvorrichtung (4) in eine den Taschencomputer (20) aufnehmende Aussparung (6) ragt.

4. Datenübertragungsvorrichtung (1) nach Anspruch 3, dadurch gekennzeichnet, daß der Dorn seitlich auslenkbar in dem Gehäuse (2) gelagert ist.

5. Datenübertragungsvorrichtung (1) nach einem der Ansprüche 2 bis 4, dadurch gekennzeichnet, daß in das Gehäuse (2) Batterien und/oder Akkumulatoren zur Stromversorgung des Taschencomputers (20) einbringbar sind.

6. Datenübertragungsvorrichtung (1) nach einem der Ansprüche 1 bis 5, dadurch gekennzeichnet, daß die Arretierung des Taschencomputers (20) in dem Gehäuse mittels der Steckvorrichtungen (4,5) und/oder weiterer Arretierungsmittel (13) erfolgt.

7. Datenübertragungsvorrichtung (1) nach einem der Ansprüche 1 bis 6, dadurch gekennzeichnet, daß zumindest die Datenbus-Steckvorrichtung (4) mittels eines an der Oberseite (14) des Gehäuses (2) angeordneten Schiebers (7) in die Datenbus-Öffnung des Taschencomputers (20) einschiebbar ist.

8. Datenübertragungsvorrichtung (1) nach einem der Ansprüche 1 bis 7, dadurch gekennzeichnet, daß das Gehäuse (2) eine seitliche Außennut (32, 33) für einen Angriff einer Montage-Halterung aufweist.

9. Datenübertragungsvorrichtung (1) nach einem der Ansprüche 1 bis 8, dadurch gekennzeichnet, daß das Gehäuse (2) einen derartigen trapezförmigen Querschnitt aufweist, daß eine Tastatur des eingelegten Taschencomputers (20) gegenüber einer horizontalen Aufstellfläche des Gehäuses (2) dem Benutzer entgegengeneigt ist.

10. Datenübertragungsvorrichtung (1) nach einem der Ansprüche 1 bis 9, dadurch gekennzeichnet, daß das Gehäuse (2) Hand-Hold-Format besitzt und mit einer oberseitigen Aussparung (6) zur lösbaren Aufnahme des Taschencomputers (20) ausgebildet ist.
